# EUROPÄISCHE PATENTSCHRIFT

(11) **EP 2 849 016 B1**
(45) Veröffentlichungstag und Bekanntmachung des Hinweises auf die Patenterteilung: **30.03.2022**
(21) Anmeldenummer: 13184752.7
(22) Anmeldetag: 17.09.2013
(51) Int. Cl.: G05B 19/418

(54) **Erstellverfahren für eine von einem Endeffektor abzufahrende Bahn**
Programming method for a path of an end effector
Procédé de réalisation pour une bande devant être éloignée d'un effecteur terminal

(43) Veröffentlichungstag der Anmeldung: 18.03.2015
(73) Patentinhaber: Siemens Aktiengesellschaft, 80333 München (DE)
(72) Erfinder: Lomakin, Dimitri, Dr., 90411 Nürnberg (DE); Sinn, Christof, Dr., 75417 Mühlacker (DE); Stolper, Thilo, 70191 Stuttgart (DE)

(56) Entgegenhaltungen:
- EP-A1- 0 271 691
- EP-A2- 0 381 185
- WO-A1-84/04980

## Beschreibung

Die vorliegende Erfindung betrifft ein Erstellverfahren für eine von einem Endeffektor abzufahrende Bahn.

Die vorliegende Erfindung betrifft weiterhin ein Computerprogramm, das Maschinencode umfasst, der von einer Programmiereinrichtung unmittelbar abarbeitbar ist, wobei die Abarbeitung des Maschinencodes durch die Programmiereinrichtung bewirkt, dass die Programmiereinrichtung ein derartiges Erstellverfahren ausführt.

Bei der Programmierung von lagegesteuerten Bewegungen muss für den Programmierer die Möglichkeit gegeben sein, Stützstellen einer von einem Endeffektor abzufahrenden Bahn anzupassen. Auch muss der Programmierer über die Möglichkeit verfügen, neue Stützstellen hinzuzufügen oder Stützstellen zu entfernen. Im Stand der Technik erfolgt die Vorgabe oftmals in einem CAD-gestützten Programm.

Zur ordnungsgemäßen Vorgabe der Stützstellen ist in dem CAD-Programm ein Modell der zu programmierenden bewegungsgesteuerten Maschine implementiert. Aufgrund von Ungenauigkeiten und Vereinfachungen des Modells gegenüber der Realität kann im Einzelfall die Notwendigkeit bestehen, dass der Programmierer die Stützstellen nachjustieren oder neue Stützstellen einführen muss.

Aus der WO 84/04980 A1 ist ein Programmierverfahren zur Verwendung beim Erstellen eines Roboterbefehlsprogramms bekannt. Dieses umfasst einen Schritt zum Einstellen von Arbeitsstationskoordinatensystemen für Arbeitsstationen durch eine Befehlsoperation, einen Schritt zum Eingeben von Betriebspositionen für einen Roboter in den Arbeitsstationskoordinatensystemen, einen Schritt zum Festlegen von Transformationsgleichungen zum Umwandeln von Positionsdaten in den Arbeitsstationskoordinatensystemen in Positionsdaten in einem Roboterkoordinatensystem, einen Schritt zum Umwandeln von Positionsdaten des Roboterbetriebs in Positionsdaten im Roboterkoordinatensystem unter Verwendung der spezifizierten Transformationsgleichungen, und einen Schritt zum Erstellen eines Roboterbefehlsprogramms unter Verwendung der durch diese Transformationen erhaltenen Positionsdaten.

Die Aufgabe der vorliegenden Erfindung besteht darin, Möglichkeiten zu schaffen, mittels derer die Programmierung von lagegesteuerten Bewegungen auf einfache Weise ermöglicht wird.

Die Aufgabe wird durch ein Erstellverfahren mit den Merkmalen des Anspruchs 1 gelöst. Vorteilhafte Ausgestaltungen des erfindungsgemäßen Erstellverfahrens sind Gegenstand der abhängigen Ansprüche.

Erfindungsgemäß wird ein Erstellverfahren für eine von einem Endeffektor abzufahrende Bahn geschaffen,
- wobei einer Programmiereinrichtung von einem Benutzer eine Anzahl von lokalen Koordinatensystemen dadurch vorgegeben wird, dass die Programmiereinrichtung von dem Benutzer die lokalen Koordinatensysteme in einem ersten Schritt entgegennimmt,
- wobei es sich bei den lokalen Koordinatensystemen insbesondere um rechtwinklige kartesische Koordinatensysteme handelt,
- wobei jedes lokale Koordinatensystem direkt oder über mindestens ein anderes lokales Koordinatensystem auf ein globales Maschinenkoordinatensystem einer bewegungsgesteuerten Maschine referenziert ist,
- wobei die Programmiereinrichtung vom Benutzer jeweils mit Bezug auf eines der lokalen Koordinatensysteme wenigstens zwei verschiedene, vom Endeffektor anzufahrende, auf unterschiedliche lokale Koordinatensysteme referenzierte Positionen in einem zweiten Schritt entgegennimmt,
- wobei die Programmiereinrichtung anhand der vom Benutzer entgegengenommenen anzufahrenden Positionen im globalen Maschinenkoordinatensystem die vom Endeffektor abzufahrende Bahn in einem dritten Schritt ermittelt,
- wobei die Programmiereinrichtung die vom Endeffektor abzufahrende Bahn als erste Datei speichert, so dass sie zu einem späteren Zeitpunkt wieder aufrufbar ist.

Vorzugsweise speichert die Programmiereinrichtung in einer zweiten Datei die Referenzierung der lokalen Koordinatensysteme auf das globale Maschinenkoordinatensystem und unter Bezug auf das jeweilige lokale Koordinatensystem die bezüglich des jeweiligen lokalen Koordinatensystems entgegengenommenen, vom Endeffektor anzufahrenden Positionen und vom Endeffektor zu umfahrenden Hindernisse. Dadurch ist es jederzeit möglich, die ursprüngliche Programmierkonfiguration, mit welcher der Benutzer gearbeitet hat, wieder herzustellen.

Die zweite Datei kann eine von der ersten Datei verschiedene Datei sein oder mit der ersten Datei identisch sein. Welche der beiden Vorgehensweisen ergriffen wird, hängt von den Umständen des Einzelfalls ab. Nachfolgend wird davon ausgegangen, dass es sich um voneinander verschiedene Dateien handelt. Dies ist jedoch nicht zwingend.

Aufgrund der Speicherung der zweiten Datei ist es insbesondere möglich, dass die Programmiereinrichtung vom Benutzer einen Aufruf der zweiten Datei entgegennimmt, daraufhin die zweite Datei aufruft und dem Benutzer zur Bearbeitung anbietet und, bezogen auf das jeweilige lokale Koordinatensystem, Änderungen der mit Bezug auf das jeweilige lokale Koordinatensystem entgegengenommenen, vom Endeffektor anzufahrenden Positionen und vom Endeffektor zu umfahrenden Hindernisse entgegennimmt. Die Änderungen können insbesondere ein Löschen und/oder ein Hinzufügen von vom Endeffektor anzufahrenden Positionen und/oder vom Endeffektor zu umfahrenden Hindernissen umfassen.

In einer bevorzugten Ausgestaltung der vorliegenden Erfindung nimmt die Programmiereinrichtung vom Benutzer eine Auswahl des jeweiligen lokalen Koordinatensystems entgegen, stellt über eine Anzeigeeinrichtung eine zweidimensionale Anzeige einer Ebene des ausgewählten lokalen Koordinatensystems dar und blendet in die dargestellte Ebene projiziert die vom Benutzer entgegengenommenen, vom Endeffektor anzufahrenden Positionen und vom Endeffektor zu umfahrenden Hindernisse ein. Durch diese Ausgestaltung sind für den Benutzer die von ihm vorgenommenen Eingaben besonders einfach und intuitiv nachvollziehbar.

Die Vorgabe von vom Endeffektor anzufahrenden Positionen und vom Endeffektor zu umfahrenden Hindernissen kann prinzipiell auf beliebige Art und Weise erfolgen. Besonders einfach und intuitiv ist es jedoch, wenn die Programmiereinrichtung zum Entgegennehmen von vom Endeffektor anzufahrenden Positionen und vom Endeffektor zu umfahrenden Hindernissen eine direkte Markierung in der dargestellten Ebene entgegennimmt. Sofern die Programmiereinrichtung jedoch einen Offset von vom Endeffektor anzufahrenden Positionen und vom Endeffektor zu umfahrenden Hindernissen von der dargestellten Ebene entgegennehmen muss, erfolgt dies vorzugsweise durch eine numerische Eingabe.

In einer besonders bevorzugten Ausgestaltung nimmt die Programmiereinrichtung vom Benutzer zusätzlich zu vom Endeffektor anzufahrenden Positionen eine jeweilige zulässige Toleranz entgegen. Durch diese Vorgehensweise vereinfacht sich die genaue Ermittlung der vom Endeffektor abzufahrenden Bahn.

In der Regel bilden die von der Programmiereinrichtung entgegengenommenen, vom Endeffektor anzufahrenden Positionen Stützstellen der vom Endeffektor abzufahrenden Bahn. In diesem Fall ermittelt die Programmiereinrichtung die abzufahrende Bahn im Maschinenkoordinatensystem vorzugsweise durch Interpolation zwischen den Stützstellen.

Vorzugsweise ermittelt die Programmiereinrichtung die vom Endeffektor abzufahrende Bahn derart, dass sie einem vorbestimmten Optimierungskriterium genügt. Das Optimierungskriterium kann nach Bedarf bestimmt sein. Es kann beispielsweise darin bestehen, dass die vom Endeffektor abzufahrende Bahn unter Berücksichtigung von Antriebsbegrenzungen von lagegeregelten Achsen der bewegungsgesteuerten Maschine zeit- oder energieoptimal abgefahren wird.

In manchen Fällen bilden die lokalen Koordinatensysteme eine Sequenz. In diesem Fall führt es zu einer besonders effizienten und komfortablen Programmierumgebung, wenn die Programmiereinrichtung, ausgehend von einem momentanen selektierten lokalen Koordinatensystem, aufgrund von für alle lokalen Koordinatensysteme einheitlichen Blätterbefehlen in der Sequenz von lokalen Koordinatensystemen das vorhergehende und/oder das nachfolgende lokale Koordinatensystem selektiert.

In einer weiteren bevorzugten Ausgestaltung ermittelt die Programmiereinrichtung anhand der ermittelten Bahn eine Sequenz von Lagesollwerten für lagegeregelte Achsen der bewegungsgesteuerten Maschine, mittels derer der Endeffektor entlang der abzufahrenden Bahn bewegt wird. Die Programmiereinrichtung ermittelt also vorzugsweise direkt das von einer Steuereinrichtung für die bewegungsgesteuerte Maschine ausführbare Steuerprogramm.

Die Aufgabe wird weiterhin durch ein Computerprogramm mit den Merkmalen des Anspruchs 15 gelöst. Erfindungsgemäß bewirkt die Abarbeitung des Maschinencodes durch die Programmiereinrichtung, dass die Programmiereinrichtung ein erfindungsgemäßes Erstellverfahren ausführt. Das Computerprogramm kann insbesondere auf einem Datenträger in maschinenlesbarer Form gespeichert sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Programmierumgebung,
- FIG 2: in perspektivischer Darstellung ein einfaches Beispiel einer von einem Endeffektor abzufahrenden Bahn,
- FIG 3: ein Ablaufdiagramm,
- FIG 4: ein Ablaufdiagramm,
- FIG 5: eine Anzeige,
- FIG 6: lokalen Koordinatensystemen zugeordnete Ebenen und
- FIG 7: ein Ablaufdiagramm.

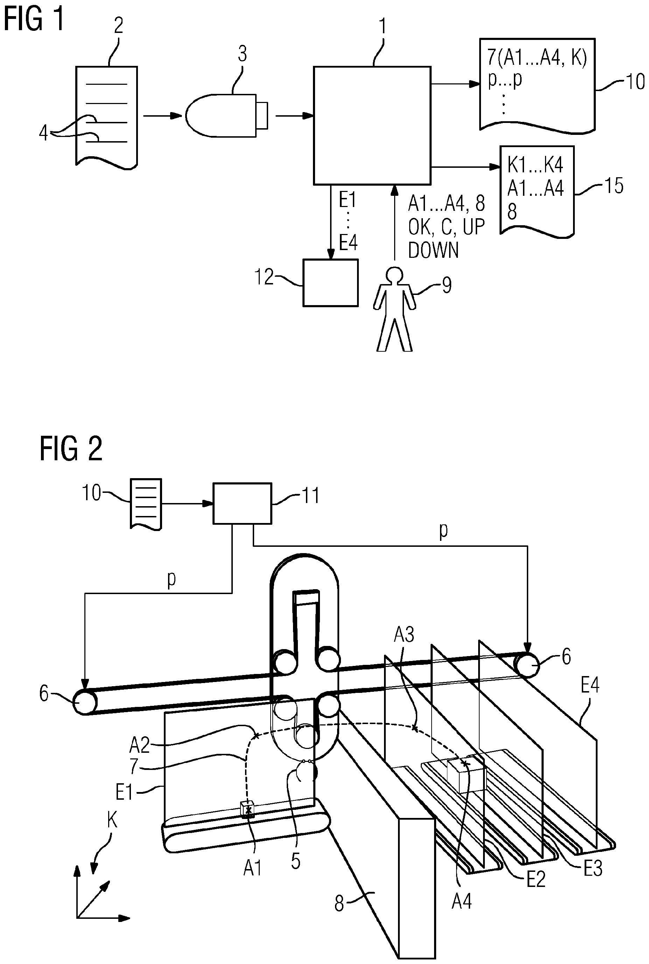

Gemäß FIG 1 ist eine Programmiereinrichtung 1 mit einem Computerprogramm 2 programmiert. Das Computerprogramm 2 kann der Programmiereinrichtung 1 beispielsweise über einen Datenträger 3 - rein beispielhaft ist in FIG 1 als Datenträger 3 ein USB-Memorystick dargestellt - zugeführt worden sein. Das Computerprogramm 2 umfasst Maschinencode 4, der von der Programmiereinrichtung 1 unmittelbar abarbeitbar ist. Die Abarbeitung des Maschinencodes 4 durch die Programmiereinrichtung 1 bewirkt, dass die Programmiereinrichtung 1 ein Ermittlungsverfahren ausführt das nachstehend in Verbindung mit den weiteren FIG näher erläutert wird.

Gemäß der rein beispielhaften Darstellung von FIG 2 soll ein Endeffektor 5 - beispielsweise ein Greifer - einer bewegungsgesteuerten Maschine mittels einer Anzahl lagegeregelter Antriebe 6 entlang einer vom Endeffektor 5 abzufahrenden Bahn 7 von einer Anfangsposition A1 zu einer Endposition A4 bewegt werden. Hierbei soll ein Hindernis 8 umfahren werden.

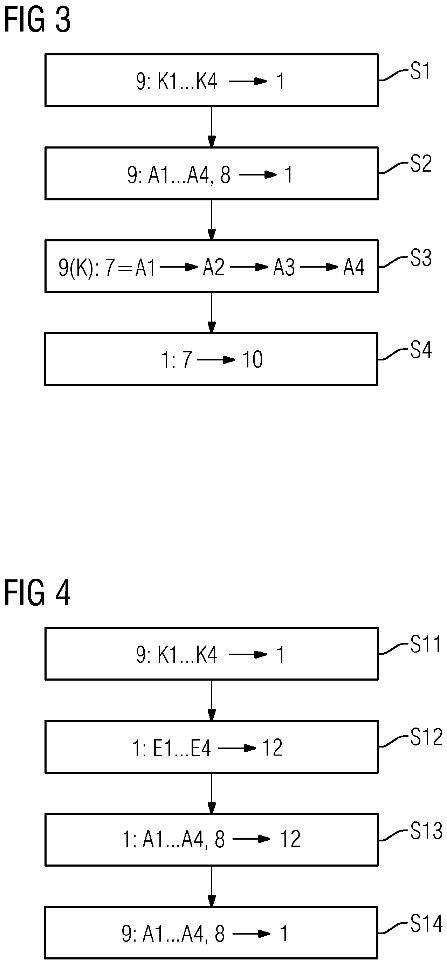

Um der Programmiereinrichtung 1 die abzufahrende Bahn 7 auf einfache Weise vorgeben zu können, gibt ein Benutzer 9 (siehe FIG 1) der Programmiereinrichtung 1 eine Anzahl von lokalen Koordinatensystemen K1 bis K4 vor. Die Programmiereinrichtung 1 nimmt die lokalen Koordinatensysteme K1 bis K4 gemäß FIG 3 in einem Schritt S1 entgegen. Die lokalen Koordinatensysteme K1 bis K4 sind in FIG 2 jeweils durch eine Ebene E1 bis E4 dargestellt. Oftmals handelt es sich bei den lokalen Koordinatensystemen K1 bis K4 um rechtwinklige kartesische Koordinatensysteme. In diesem Fall enthält die jeweils dargestellte Ebene E1 bis E4 vorzugsweise den Ursprung des jeweiligen lokalen Koordinatensystems K1 bis K4 sowie zwei Achsen des jeweiligen lokalen Koordinatensystems K1 bis K4. Die dritte Achse des jeweiligen lokalen Koordinatensystems K1 bis K4 verläuft in diesem Fall orthogonal zur jeweiligen Ebene E1 bis E4.

Im Rahmen der Vorgabe des jeweiligen lokalen Koordinatensystems K1 bis K4 nimmt die Programmiereinrichtung 1 vom Benutzer 9 eine Referenzierung entgegen. Die Referenzierung kann unmittelbar auf ein globales Maschinenkoordinatensystem K der bewegungsgesteuerten Maschine bezogen sein. In diesem Fall ist die Referenzierung auf das globale Maschinenkoordinatensystem K direkt. Alternativ kann die Referenzierung auf eines der vom Benutzer 9 bereits vorgegebenen lokalen Koordinatensysteme K1 bis K4 bezogen sein. In diesem Fall ist die Referenzierung auf das globale Maschinenkoordinatensystem K indirekt, nämlich über mindestens ein anderes, bereits vorgegebenes lokales Koordinatensystem K1 bis K4. Dieses lokale Koordinatensystem K1 bis K4 ist ebenfalls auf das globale Maschinenkoordinatensystem K referenziert. Diese Referenzierung kann alternativ direkt oder indirekt sein. Es ist also eine mehrstufige, rekursive Referenzierung auf das globale Maschinenkoordinatensystem K möglich.

Weiterhin gibt der Benutzer 9 der Programmiereinrichtung 1 jeweils mit Bezug auf eines der lokalen Koordinatensysteme K1 bis K4 von vom Endeffektor 5 anzufahrenden Positionen A1 bis A4 vor. Beispielsweise kann der Benutzer 9 in der Ebene E1 die Anfangsposition A1 und in der Ebene E3 die Endposition A4 vorgeben. Soweit erforderlich, kann der Benutzer 9 zusätzlich Zwischenpositionen A2, A3 vorgeben, die der Endeffektor 5 auf seinem Weg von der Anfangsposition A1 zur Endposition A4 anfahren soll. Beispielsweise kann der Benutzer 9 in der Ebene E1 eine erste Zwischenposition A2 und in der Ebene E2 eine zweite Zwischenposition A3 vorgeben. Weiterhin kann der Benutzer 9 der Programmiereinrichtung 1 die Position des Hindernisses 8 vorgeben. Die entsprechenden Vorgaben des Benutzers 9 nimmt die Programmiereinrichtung 1 in einem Schritt S2 entgegen.

Anhand der vom Benutzer 9 entgegengenommenen Positionen A1 bis A4 und Hindernisse 8 ermittelt die Programmiereinrichtung 1 in einem Schritt S3 im globalen Maschinenkoordinatensystem K die vom Endeffektor 5 abzufahrende Bahn 7. Die abzufahrende Bahn 7, also eine entsprechende Sequenz von Koordinaten im globalen Maschinekoordinatensystem K, speichert die Programmiereinrichtung 1 in einem Schritt S4 in einer ersten Datei 10. Aufgrund der Speicherung der ersten Datei 10 kann die erste Datei 10 jederzeit zu einem späteren Zeitpunkt wieder aufgerufen werden. Beispielsweise kann sie - siehe FIG 2 - zu einer Maschinensteuerung 11 transferiert werden, von der sie dann unter Ansteuerung von deren lagegeregelten Antrieben 6 abgearbeitet wird.

Ergänzend ist es sogar möglich, dass die Programmiereinrichtung 1 anhand der ermittelten Bahn 7 eine Sequenz von Lagesollwerten p für die lagegeregelten Achsen 6 der bewegungsgesteuerten Maschine ermittelt. Die Ermittlung erfolgt derart, dass mittels der Sequenz von Lagesollwerten p der Endeffektor 5 entlang der abzufahrenden Bahn 7 bewegt wird. Die Sequenz von Lagesollwerten p kann entsprechend der Darstellung in FIG 2 in der ersten Datei 10 oder aber in einer anderen, in den FIG nicht dargestellten Datei gespeichert werden.

Gemäß den obenstehend in Verbindung mit FIG 3 getroffenen Erläuterungen erfolgt zuerst die Vorgabe der lokalen Koordinatensysteme K1 bis K4 und erst danach die Vorgabe der anzufahrenden Positionen A1 bis A4 und der zu umfahrenden Hindernisse 8. Es ist jedoch auch eine vermischte Vorgehensweise möglich, bei welcher jederzeit bezüglich jedes bereits definierten und vorzugsweise auch bereits referenzierten lokalen Koordinatensystems K1 bis K4 die Vorgabe von anzufahrenden Positionen A1 bis A4 und zu umfahrenden Hindernissen 8 möglich ist.

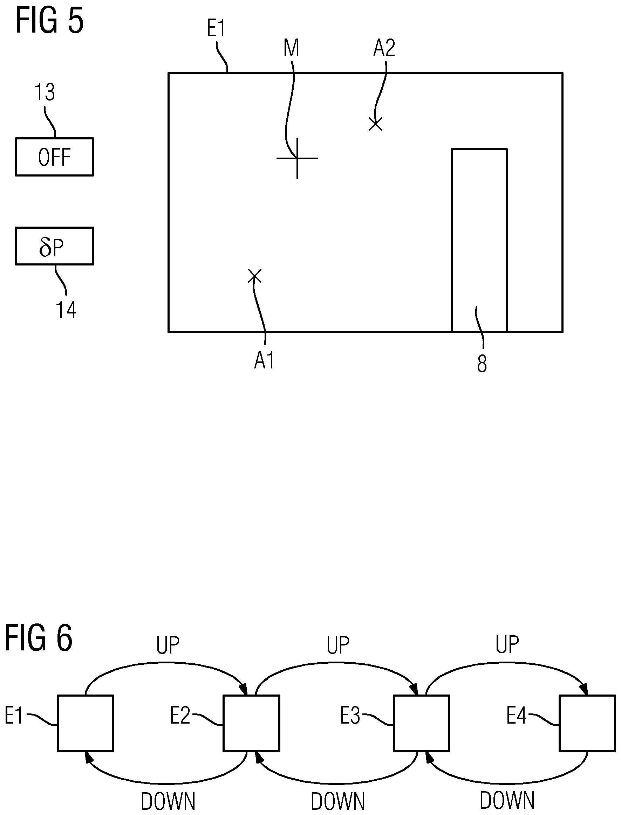

Zur Vorgabe von Positionen A1 bis A4 und Hindernissen 8 nimmt die Programmiereinrichtung 1 vorzugsweise gemäß der Darstellung in FIG 4 zunächst in einem Schritt S11 eine Auswahl des jeweiligen lokalen Koordinatensystems K1 bis K4 entgegen. In einem Schritt S12 stellt die Programmiereinrichtung 1 sodann über eine Anzeigeeinrichtung 12 (siehe FIG 1) eine zweidimensionale Anzeige einer Ebene - insbesondere der jeweiligen Ebene E1 bis E4 des ausgewählten lokalen Koordinatensystems K1 bis K4 - dar. FIG 5 zeigt - rein beispielhaft - die Ebene E1. In die dargestellte Ebene E1 bis E4 blendet die Programmiereinrichtung 1 in einem Schritt S13 die vom Benutzer 9 entgegengenommenen Positionen A1 bis A4 und Hindernisse 8 ein. Soweit die Positionen A1 bis A4 und Hindernisse 8 nicht Bestandteil der dargestellten Ebene E1 bis E4 als solche sind, nimmt die Programmiereinrichtung 1 eine Projektion in die dargestellte Ebene E1 bis E4 vor. Vorzugsweise werden im Rahmen dieser Einblendungen nur diejenigen Positionen A1 bis A4 eingeblendet, welche vom Benutzer 9 in Bezug auf das lokale Koordinatensystem K1 bis K4 der dargestellten Ebene E1 bis E4 vorgegeben wurden. Falls also entsprechend der Darstellung in FIG 5 beispielsweise die Ebene E1 dargestellt wird, werden nur die Anfangsposition A1, die Zwischenposition A2 und das Hindernis 8 eingeblendet, da nur diese in Bezug auf das lokale Koordinatensystem K1 der Ebene E1 vorgegeben wurden.

In einem - gegebenenfalls wiederholt ausgeführten - Schritt S14 nimmt die Programmiereinrichtung 1 sodann entsprechend einer möglichen Implementierung des Schrittes S2 die Positionen A1 bis A4 und Hindernisse 8 des entsprechenden lokalen Koordinatensystems K1 bis K4 entgegen. Hierbei ist es insbesondere entsprechend der Darstellung in FIG 5 möglich, dass die Programmiereinrichtung 1 im Rahmen des Schrittes S14 zum Entgegennehmen von Positionen A1 bis A4 und Hindernissen 8 eine direkte Markierung M in der dargestellten Ebene E1 entgegennimmt, beispielsweise die Positionierung eines Cursors nebst Vorgabe eines Bestätigungsbefehls. Sofern die vorgegebene Position A1 bis A4 oder das vorgegebene Hindernis 8 nicht direkt in der dargestellten Ebene E1 liegen, nimmt die Programmiereinrichtung 1 vom Benutzer 9 zusätzlich einen entsprechenden Offset OFF entgegen. Die Vorgabe des Offsets OFF erfolgt gemäß FIG 5 durch Vorgabe einer entsprechenden numerischen Eingabe in ein Eingabefeld 13.

Vorzugsweise kann der Benutzer 9 der Programmiereinrichtung 1 weiterhin - und zwar vorzugsweise separat für jede einzelne anzufahrende Position A1 bis A4 - zusätzlich zu der jeweils anzufahrenden Position A1 bis A4 eine jeweilige zulässige Toleranz δP vorgeben. Beispielsweise kann der Benutzer 9 entsprechend der Darstellung in FIG 5 in ein weiteres Eingabefeld 14 eine entsprechende numerische Eingabe machen. Auch die zulässige Toleranz δP wird gemäß FIG 5 in die dargestellte Ebene E1 bis E4 mit eingeblendet.

Die vom Benutzer 9 vorgegebenen, von der Programmiereinrichtung 1 entgegengenommenen Positionen A1 bis A4 bilden Stützstellen der abzufahrenden Bahn 7. Die Programmiereinrichtung 1 ermittelt die abzufahrende Bahn 7 daher entsprechend der Darstellung in FIG 3 durch Interpolation zwischen den Stützstellen A1 bis A4. Die Bahn 7 wird, wie in FIG 3 angedeutet, im Maschinenkoordinatensystem K ermittelt.

Die Ermittlung der abzufahrenden Bahn 7 durch die Programmiereinrichtung 1 erfolgt - selbstverständlich - unter Berücksichtigung der vorgegebenen anzufahrenden Positionen A1 bis A4 und der vorgegebenen zu umfahrenden Hindernisse 8. Weiterhin ermittelt die Programmiereinrichtung 1 die abzufahrende Bahn 7 derart, dass sie einem Optimierungskriterium OK genügt. Das Optimierungskriterium OK kann alternativ der Programmiereinrichtung 1 fest vorgegeben sein oder aber der Programmiereinrichtung 1 vom Benutzer 9 vorgegeben werden. Es kann beispielsweise darin bestehen, dass die abzufahrende Bahn 7 unter Berücksichtigung von Antriebsbegrenzungen der lagegeregelten Achsen 6 der bewegungsgesteuerten Maschine zeit- oder energieoptimal abgefahren wird. Derartige Vorgehensweisen sind Fachleuten allgemein bekannt. Die Antriebsbegrenzungen der lagegeregelten Achsen 6 können beispielsweise maximal zulässige positive und negative Geschwindigkeiten, maximal zulässige positive und negative Beschleunigungen sowie maximal zulässige positive und negative Rucke sein. Unter Umständen kommen auch Verfahrbegrenzungen in Frage.

Die lokalen Koordinatensysteme K1 bis K4 können - sei es zwangsläufig, sei es beispielsweise aufgrund der Reihenfolge ihrer Definition, sei es beispielsweise aufgrund einer willkürlichen Festlegung durch den Benutzer 9 - eine Sequenz bilden. Beispielsweise kann entsprechend der Darstellung in FIG 6 - bezogen auf die den lokalen Koordinatensystemen K1 bis K4 zugeordneten Ebenen E1 bis E4 - die Reihenfolge E1-E2-E3-E4 bestehen. Unabhängig davon, ob die lokalen Koordinatensysteme K1 bis K4 eine Sequenz bilden oder nicht, können sie vom Benutzer 9 stets direkt selektiert werden. Falls die lokalen Koordinatensysteme K1 bis K4 jedoch eine Sequenz bilden, kann zum Auswählen eines lokalen Koordinatensystems K1 bis K4 zusätzlich eine indirekte Selektion nach Art eines Blätterns möglich sein. In diesem Fall kann der Benutzer 9 - siehe FIG 6 - beispielsweise einen Blätterbefehl UP zum Vorwärtsblättern oder alternativ einen Blätterbefehl DOWN zum Rückwärtsblättern vorgeben. Wenn der Benutzer 9 den Blätterbefehl UP zum Vorwärtsblättern vorgibt, selektiert die Programmiereinrichtung 1, ausgehend von dem zum Zeitpunkt der Vorgabe des Blätterbefehls UP selektierten lokalen Koordinatensystem K1 bis K4, das unmittelbar nachfolgende lokale Koordinatensystem K1 bis K4. Wenn der Benutzer 9 den Blätterbefehl DOWN zum Rückwärtsblättern vorgibt, selektiert die Programmiereinrichtung 1, ausgehend von dem zum Zeitpunkt der Vorgabe des Blätterbefehls DOWN selektierten lokalen Koordinatensystem K1 bis K4, das unmittelbar vorausgehende lokale Koordinatensystem K1 bis K4.

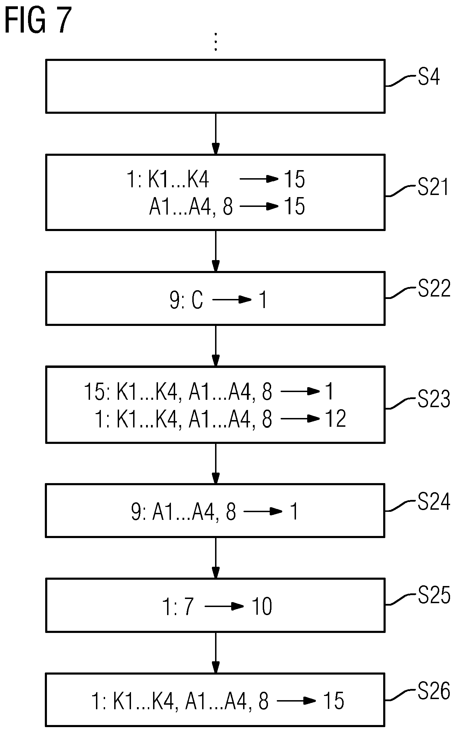

Gemäß FIG 7 - siehe ergänzend FIG 1 - speichert die Programmiereinrichtung 1 vorzugsweise in einem Schritt S21 in einer zweiten Datei 15
- die lokalen Koordinatensysteme K1 bis K4 einschließlich ihrer Referenzierung (und damit im Ergebnis die Referenzierung auf das globale Maschinenkoordinatensystem K) sowie
- unter Bezug auf das jeweilige lokale Koordinatensystem K1 bis K4 die bezüglich des jeweiligen lokalen Koordinatensystems K1 bis K4 entgegengenommenen Positionen A1 bis A4 und Hindernisse 8.

Gegebenenfalls kann die Speicherung aufgrund eines eigenen Speicherbefehls erfolgen. Unabhängig hiervon ist es aufgrund der Speicherung der zweiten Datei 15 jedoch möglich, dass der Benutzer 9 der Programmiereinrichtung 1 einen Aufrufbefehl C vorgibt, den die Programmiereinrichtung 1 in einem Schritt S22 entgegennimmt. Aufgrund des Aufrufbefehls C ruft die Programmiereinrichtung 1 in einem Schritt S23 die zweite Datei 15 auf und bietet sie dem Benutzer 9 in üblicher Weise zur Bearbeitung an. Insbesondere wird dem Benutzer 9 die Möglichkeit gegeben, der Programmiereinrichtung 1 in einem - gegebenenfalls wiederholt ausgeführten - Schritt S24 Änderungen vorzugeben. Die Änderungen können Änderungen von bereits definierten anzufahrenden Positionen A1 bis A4 oder Änderungen von bereits definierten Hindernissen 8 in Bezug auf das jeweilige lokale Koordinatensystem K1 bis K4 sein. Alternativ kann es sich um Änderungen der Referenzierung von bestehenden lokalen Koordinatensystemen K1 bis K4 handeln. Wiederum alternativ kann in bestehenden lokalen Koordinatensystemen K1 bis K4 eine Löschung oder eine Hinzufügung von anzufahrenden Positionen A1 bis A4 und Hindernissen 8 vorgenommen werden. Wiederum alternativ können neue lokale Koordinatensysteme definiert und direkt oder indirekt auf das globale Maschinenkoordinatensystem K referenziert werden und bezüglich der neuen lokalen Koordinatensysteme anzufahrende Positionen und zu umfahrende Hindernisse vorgegeben werden. Selbstverständlich kann auch in diesem Fall in Schritten S25 und S26 ein Abspeichern einer entsprechend modifizierten ersten Datei 10 und einer entsprechend modifizierten zweiten Datei 15 erfolgen.

Zusammengefasst betrifft die vorliegende Erfindung also folgenden Sachverhalt:
Eine Programmiereinrichtung 1 nimmt von einem Benutzer 9 eine Anzahl von lokalen Koordinatensystemen K1 bis K4 entgegen. Jedes lokale Koordinatensystem K1 bis K4 ist direkt oder über mindestens ein anderes lokales Koordinatensystem K1 bis K4 auf ein globales Maschinenkoordinatensystem K einer bewegungsgesteuerten Maschine referenziert. Die Programmiereinrichtung 1 nimmt vom Benutzer 9 jeweils mit Bezug auf eines der lokalen Koordinatensysteme K1 bis K4 vom Endeffektor 5 anzufahrenden Positionen A1 bis A4 und/oder von vom Endeffektor 5 zu umfahrenden Hindernissen 8 entgegen. Die Programmiereinrichtung 1 ermittelt anhand der vom Benutzer 9 entgegengenommenen anzufahrenden Positionen A1 bis A4 und/oder der vom Benutzer 9 entgegengenommenen Hindernisse 8 im globalen Maschinenkoordinatensystem K die vom Endeffektor 5 abzufahrende Bahn 7. Die Programmiereinrichtung 1 speichert die vom Endeffektor 5 abzufahrende Bahn 7 als erste Datei 10, so dass sie zu einem späteren Zeitpunkt wieder aufrufbar ist.

Die vorliegende Erfindung weist viele Vorteile auf. Insbesondere ist es auf einfache, flexible und zuverlässige Weise möglich, der Programmiereinrichtung 1 die relevanten Informationen (anzufahrende Positionen A1 bis A4 und zu umfahrende Hindernisse 8) vorzugeben sowie diese Informationen, soweit erforderlich, anzupassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Erstellverfahren für eine von einem Endeffektor (5) abzufahrende Bahn (7),
- wobei einer Programmiereinrichtung (1) von einem Benutzer (9) eine Anzahl von lokalen Koordinatensystemen (K1 bis K4) dadurch vorgegeben wird, dass die Programmiereinrichtung (1) von dem Benutzer (9) die lokalen Koordinatensysteme (K1 bis K4) in einem ersten Schritt (S1) entgegennimmt,
- wobei es sich bei den lokalen Koordinatensystemen (K1 bis K4) insbesondere um rechtwinklige kartesische Koordinatensysteme handelt,
- wobei jedes lokale Koordinatensystem (K1 bis K4) direkt oder über mindestens ein anderes lokales Koordinatensystem (K1 bis K4) auf ein globales Maschinenkoordinatensystem (K) einer bewegungsgesteuerten Maschine referenziert ist,
- wobei die Programmiereinrichtung (1) vom Benutzer (9) jeweils mit Bezug auf eines der lokalen Koordinatensysteme (K1 bis K4) wenigstens zwei verschiedene, vom Endeffektor (5) anzufahrende, auf unterschiedliche lokale Koordinatensysteme (K1 bis K4) referenzierte Positionen (A1 bis A4) in einem zweiten Schritt (S2) entgegennimmt,
- wobei die Programmiereinrichtung (1) anhand der vom Benutzer (9) entgegengenommenen anzufahrenden Positionen (A1 bis A4) im globalen Maschinenkoordinatensystem (K) die vom Endeffektor (5) abzufahrende Bahn (7) in einem dritten Schritt (S3) ermittelt,
- wobei die Programmiereinrichtung (1) die vom Endeffektor (5) abzufahrende Bahn (7) als erste Datei (10) speichert, so dass sie zu einem späteren Zeitpunkt wieder aufrufbar ist.

2. Erstellverfahren nach Anspruch 1,
**dadurch gekennzeichnet, dass** die Programmiereinrichtung (1) vom Benutzer (9) jeweils mit Bezug auf eines der lokalen Koordinatensysteme (K1 bis K4) vom Endeffektor (5) zu umfahrende Hindernisse (8) entgegennimmt und dass die Programmiereinrichtung (1) anhand der vom Benutzer (9) entgegengenommenen Hindernisse (8) im globalen Maschinenkoordinatensystem (K) die vom Endeffektor (5) abzufahrende Bahn (7) ermittelt.

3. Erstellverfahren nach einem der Ansprüche 1 oder 2,
**dadurch gekennzeichnet, dass** die Programmiereinrichtung (1) in einer zweiten Datei (15) die Referenzierung der lokalen Koordinatensysteme (K1 bis K4) auf das globale Maschinenkoordinatensystem (K) und unter Bezug auf das jeweilige lokale Koordinatensystem (K1 bis K4) die bezüglich des jeweiligen lokalen Koordinatensystems (K1 bis K4) entgegengenommenen, vom Endeffektor (5) anzufahrenden Positionen (A1 bis A4) und vom Endeffektor (5) zu umfahrenden Hindernisse (8) speichert.

4. Erstellverfahren nach Anspruch 3,
**dadurch gekennzeichnet, dass** die Programmiereinrichtung (1) vom Benutzer (9) einen Aufruf (C) der zweiten Datei (15) entgegennimmt, daraufhin die zweite Datei (15) aufruft und dem Benutzer (9) zur Bearbeitung anbietet und, bezogen auf das jeweilige lokale Koordinatensystem (K1 bis K4), Änderungen der mit Bezug auf das jeweilige lokale Koordinatensystem (K1 bis K4) entgegengenommenen, vom Endeffektor (5) anzufahrenden Positionen (A1 bis A4) und vom Endeffektor (5) zu umfahrenden Hindernisse (8) entgegennimmt.

5. Erstellverfahren nach Anspruch 4,
**dadurch gekennzeichnet, dass** die Änderungen ein Löschen und/oder ein Hinzufügen von vom Endeffektor (5) anzufahrenden Positionen (A1 bis A4) und/oder vom Endeffektor (5) zu umfahrenden Hindernissen (8) umfassen.

6. Erstellverfahren nach einem der obigen Ansprüche,
**dadurch gekennzeichnet, dass** die Programmiereinrichtung (1) vom Benutzer (9) eine Auswahl des jeweiligen lokalen Koordinatensystems (K1 bis K4) entgegennimmt, dass die Programmiereinrichtung (1) über eine Anzeigeeinrichtung (11) eine zweidimensionale Anzeige einer Ebene (El bis E4) des ausgewählten lokalen Koordinatensystems (K1 bis K4) darstellt und in die dargestellte Ebene (El bis E4) projiziert die vom Benutzer (9) entgegengenommenen, vom Endeffektor (5) anzufahrenden Positionen (A1 bis A4) und vom Endeffektor (5) zu umfahrenden Hindernisse (8) einblendet.

7. Erstellverfahren nach Anspruch 6,
**dadurch gekennzeichnet, dass** die Programmiereinrichtung (1) zum Entgegennehmen von vom Endeffektor (5) anzufahrenden Positionen (A1 bis A4) und vom Endeffektor (5) zu umfahrenden Hindernissen (8) eine direkte Markierung (M) in der dargestellten Ebene (El bis E4) entgegennimmt.

8. Erstellverfahren nach Anspruch 6 oder 7,
**dadurch gekennzeichnet, dass** die Programmiereinrichtung (1) zum Entgegennehmen eines Offsets (OFF) von vom Endeffektor (5) anzufahrenden Positionen (A1 bis A4) und vom Endeffektor (5) zu umfahrenden Hindernissen (8) von der dargestellten Ebene (El bis E4) eine numerischen Eingabe entgegennimmt.

9. Erstellverfahren nach Anspruch 6, 7 oder 8,
**dadurch gekennzeichnet, dass** die Programmiereinrichtung (1) vom Benutzer (9) zusätzlich zu vom Endeffektor (5) anzufahrenden Positionen (A1 bis A4) eine jeweilige zulässige Toleranz (δP) entgegennimmt.

10. Erstellverfahren nach einem der obigen Ansprüche,
**dadurch gekennzeichnet, dass** die von der Programmiereinrichtung (1) entgegengenommenen, vom Endeffektor (5) anzufahrenden Positionen (A1 bis A4) Stützstellen der vom Endeffektor (5) abzufahrenden Bahn (7) bilden und dass die Programmiereinrichtung (1) die abzufahrende Bahn (7) im globalen Maschinenkoordinatensystem (K) durch Interpolation zwischen den Stützstellen (A1 bis A4) ermittelt.

11. Erstellverfahren nach einem der obigen Ansprüche,
**dadurch gekennzeichnet, dass** die Programmiereinrichtung (1) die vom Endeffektor (5) abzufahrende Bahn (7) derart ermittelt, dass sie einem vorbestimmten Optimierungskriterium (OK) genügt.

12. Erstellverfahren nach Anspruch 11,
**dadurch gekennzeichnet, dass** das Optimierungskriterium (OK) darin besteht, dass die vom Endeffektor (5) abzufahrende Bahn (7) unter Berücksichtigung von Antriebsbegrenzungen von lagegeregelten Achsen (6) der bewegungsgesteuerten Maschine zeit- oder energieoptimal abgefahren wird.

13. Erstellverfahren nach einem der obigen Ansprüche,
**dadurch gekennzeichnet, dass** die lokalen Koordinatensysteme (K1 bis K4) eine Sequenz bilden und dass die Programmiereinrichtung (1), ausgehend von einem momentan selektierten lokalen Koordinatensystem (K1 bis K4), aufgrund von für alle lokalen Koordinatensysteme (K1 bis K4) einheitlichen Blätterbefehlen (UP, DOWN) in der Sequenz von lokalen Koordinatensystemen (K1 bis K4) das vorhergehende und/oder das nachfolgende lokale Koordinatensystem (K1 bis K4) selektiert.

14. Erstellverfahren nach einem der obigen Ansprüche,
**dadurch gekennzeichnet, dass** die Programmiereinrichtung (1) anhand der ermittelten Bahn (7) eine Sequenz von Lagesollwerten (p) für lagegeregelte Achsen (6) der bewegungsgesteuerten Maschine ermittelt, mittels derer der Endeffektor (5) entlang der abzufahrenden Bahn (7) bewegt wird.

15. Computerprogramm, das Maschinencode (4) umfasst, der von einer Programmiereinrichtung (1) unmittelbar abarbeitbar ist, wobei die Abarbeitung des Maschinencodes (4) durch die Programmiereinrichtung (1) bewirkt, dass die Programmiereinrichtung (1) ein Erstellverfahren nach einem der obigen Ansprüche ausführt.

16. Computerprogramm nach Anspruch 15,
**dadurch gekennzeichnet, dass** es auf einem Datenträger (3) in maschinenlesbarer Form gespeichert ist.

## Claims

1. Programming method for a path (7) to be travelled by an end effector (5),
- wherein a number of local coordinate systems (K1 to K4) are specified for a programming device (1) by a user (9) in that the programming device (1) receives the local coordinate systems (K1 to K4) from the user (9) in a first step (S1),
- wherein the local coordinate systems (K1 to K4) are in particular rectangular Cartesian coordinate systems,
- wherein each local coordinate system (K1 to K4) is referenced directly or via at least one other local coordinate system (K1 to K4) to a global machine coordinate system (K) of a motion-controlled machine,
- wherein the programming device (1) receives from the user (9), in each case with reference to one of the local coordinate systems (K1 to K4), at least two different positions (A1 to A4) to be approached by the end effector (5) referenced to different local coordinate systems (A1 to A4) in a second step (S2),
- wherein the programming device (1) determines, on the basis of the positions (A1 to A4) to be approached received from the user (9) in the global machine coordinate system (K), the path (7) to be travelled by the end effector (5) in a third step (S3),
- wherein the programming device (1) stores the path (7) to be travelled by the end effector (5) as a first file (10) so that it can be retrieved again at a later time.

2. Programming method according to claim 1,
**characterised in that** the programming device (1) receives from the user (9), in each case with reference to one of the local coordinate systems (K1 to K4), obstacles (8) to be bypassed by the end effector (5) and that the programming device (1) determines, on the basis of the obstacles (8) received from the user (9) in the global machine coordinate system (K), the path (7) to be travelled by the end effector (5).

3. Programming method according to one of claims 1 or 2,
**characterised in that** the programming device (1) stores the referencing of the local coordinate systems (K1 to K4) to the global machine coordinate system (K) and, with reference to the respective local coordinate system (K1 to K4), the positions (A1 to A4) to be approached by the end effector (5) and the obstacles (8) to be bypassed by the end effector (5) received with reference to the respective local coordinate systems (K1 to K4) in a second file (15).

4. Programming method according to claim 3,
**characterised in that** the programming device (1) receives from the user (9) a request (C) for the second file (15), then calls up the second file (15) and offers it to the user (9) for execution and, based on the respective local coordinate system (K1 to K4), receives changes to the positions (A1 to A4) to be approached by the end effector (5) and obstacles (8) to be bypassed by the end effector (5) received with reference to the respective local coordinate system (K1 to K4).

5. Programming method according to claim 4,
**characterised in that** the changes entail the deletion or and/or addition of positions (A1 to A4) to be approached by the end effector (5) and/or obstacles (8) to be bypassed by the end effector (5).

6. Programming method according to one of the above claims,
**characterised in that** the programming device (1) receives from the user (9) a selection of the respective local coordinate systems (K1 to K4), that the programming device (1) depicts on a display mechanism (11) a two-dimensional display of a plane (E1 to E4) of the selected local coordinate system (K1 to K4) and, in the depicted plane (E1 to E4), projects the positions (A1 to A4) to be approached by the end effector (5) received from the user (9), and superimposes obstacles (8) to be bypassed by the end effector (5).

7. Programming method according to claim 6,
**characterised in that** the programming device (1) for receiving positions (A1 to A4) to be approached by the end effector (5) and obstacles (8) to be bypassed by the end effector (5) receives a direct marking (M) in the plane depicted (E1 to E4).

8. Programming method according to claim 6 or 7,
**characterised in that** the programming device (1), to receive one offset (OFF) of positions (A1 to A4) to be approached by the end effector (5) and obstacles (8) to be bypassed by the end effector (5) receives a numerical input from the plane depicted (E1 to E4).

9. Programming method according to claim 6, 7 or 8,
**characterised in that**, in addition to positions (A1 to A4) to be approached by the end effector (5), the programming device (1) receives a respective permissible tolerance (δP) from the user (9).

10. Programming method according to one of the above claims,
**characterised in that** the positions (A1 to A4) to be approached by the end effector (5) received by the programming device (1) form interpolation points in the path (7) to be travelled by the end effector (5) and that the programming device (1) determines the path (7) to be travelled in the global machine coordinate system (K) by interpolation between the interpolation points (A1 to A4).

11. Programming method according to one of the above claims,
**characterised in that** the programming device (1) determines the path (7) to be approached by the end effector (5) such that it satisfies a predetermined optimisation criterion (OK).

12. Programming method according to claim 11,
**characterised in that** the optimisation criterion (OK) consists in the fact that the path (7) to be travelled by the end effector (5) is travelled in a time-optimised or energy-optimised way taking into account drive limitations of position-controlled axes (6) of the motion-controlled machine.

13. Programming method according to one of the above claims,
**characterised in that** the local coordinate systems (K1 to K4) form a sequence and that, based on a currently selected local coordinate system (K1 to K4), the programming device (1) selects the preceding and/or the subsequent local coordinate system (K1 to K4) on the basis of uniform scroll commands (UP, DOWN) for all local coordinate systems (K1 to K4) in the sequence of local coordinate systems (K1 to K4).

14. Programming method according to one of the above claims,
**characterised in that** the programming device (1) determines, with reference to the determined path (7), a sequence of setpoint values (p) for position-controlled axes (6) of the motion-controlled machine, by means of which the end effector (5) is moved along the path (7) to be travelled.

15. Computer program comprising a machine code (4), that can be executed directly by a programming device (1), wherein the execution of the machine code (4) by the programming device (1) causes the programming device (1) to perform a programming method according to one of the above claims.

16. Computer program according to claim 15,
**characterised in that** it is stored on a data carrier (3) in machine-readable form.

## Revendications

1. Procédé d'établissement d'une voie (7) à parcourir par un effecteur (5) terminal,
- dans lequel il est prescrit à un dispositif (1) de programmation par un utilisateur (9) un nombre de systèmes (K1 à K4) de coordonnées locaux, par le fait que le dispositif (1) de programmation reçoit, dans un premier stade (S1), de l'utilisateur (9) les systèmes (K1 à K4) de coordonnées locaux,
- dans lequel les systèmes (K1 à K4) de coordonnées locaux sont notamment des systèmes de coordonnées cartésiens rectangulaires,
- dans lequel chaque système (K1 à K4) de coordonnées local est référencé directement ou par l'intermédiaire un autre système (K1 à K4) de coordonnées local sur un système (K) de coordonnées de machine global d'une machine commandée en déplacement,
- dans lequel le dispositif (1) de programmation reçoit, dans un deuxième stade (S2), de l'utilisateur (9) respectivement en référence à l'un des systèmes (K1 à K4) de coordonnées locaux, au moins deux positions (A1 à A4) différentes, à parcourir par l'effecteur (5) d'extrémité et référencées sur des systèmes (K1 à K4) de coordonnées locaux différents,
- dans lequel le dispositif (1) de programmation détermine, dans un troisième stade (S3), à l'aide des positions (A1 à A4) à parcourir reçues de l'utilisateur (9) dans le système (K) de coordonnées de machine global, la voie (7) à parcourir par l'effecteur (5) d'extrémité,
- dans lequel le dispositif (1) de programmation met en mémoire, sous la forme d'un premier fichier (10), la voie (7) à parcourir par l'effecteur (5) d'extrémité de manière à pouvoir l'appeler à nouveau à un instant ultérieur.

2. Procédé d'établissement suivant la revendication 1,
**caractérisé en ce que**
le dispositif (1) de programmation reçoit de l'utilisateur (9) respectivement par rapport à l'un des systèmes (K1 à K4) de coordonnées locaux des obstacles (8) à contourner par l'effecteur (5) d'extrémité et **en ce que** le dispositif (1) de programmation détermine, à l'aide des obstacles (8) reçus de l'utilisateur (9), dans le système (K) de coordonnées de machine global, la voie (7) à parcourir par l'effecteur (5) d'extrémité.

3. Procédé d'établissement suivant l'une des revendications 1 ou 2,
**caractérisé en ce que**
le dispositif (1) de programmation met en mémoire, dans un deuxième fichier (15), le référencement des systèmes (K1 à K4) de coordonnées locaux sur le système (K) de coordonnées de machine global et, en se reportant au système (K1 à K4) de cordonnées local respectif, les positions (A1 à A4) reçues rapportées au système (K1 à K4) de coordonnées local respectif et à parcourir par l'effecteur (5) d'extrémité et des obstacles (8) à contourner par l'effecteur (5) d'extrémité.

4. Procédé d'établissement suivant la revendication 3,
**caractérisé en ce que**
le dispositif (1) de programmation reçoit de l'utilisateur (9) un appel (C) du deuxième fichier (15), appelle ensuite le deuxième fichier (15) et l'offre pour traitement à l'utilisateur (9) et, rapporté au système (K1 à K4) de coordonnées local respectif, reçoit des modifications des positions (A1 à A4) reçues par rapport au système (K1 à K4) de coordonnées local respectif et à parcourir par l'effecteur (5) d'extrémité et des obstacles (8) à contourner par l'effecteur (5) d'extrémité.

5. Procédé d'établissement suivant la revendication 4,
**caractérisé en ce que**
les modifications comprennent un effacement et/ou un ajout de positions (A1 à A4) à parcourir par l'effecteur (5) d'extrémité et/ou d'obstacles (8) à contourner par l'effecteur (5) d'extrémité.

6. Procédé d'établissement suivant l'une des revendications précédentes,
**caractérisé en ce que**
le dispositif (1) de programmation reçoit de l'utilisateur (9) une sélection du système (K1 à K4) de coordonnées local respectif, **en ce que** le dispositif (1) de programmation représente, par l'intermédiaire d'un dispositif (11) d'affichage, un affichage en deux dimensions d'un plan (El à E4) du système (K1 à K4) de coordonnées local sélectionné et, projeté dans le plan (El à E4) représenté, incorpore les positions (A1 à A4) reçues de l'utilisateur (9) et à parcourir par l'effecteur (5) d'extrémité et des obstacles (8) à contourner par l'effecteur (5) d'extrémité.

7. Procédé d'établissement suivant la revendication 6,
**caractérisé en ce que**
le dispositif (1) de programmation reçoit un repérage (M) direct dans le plan (El à E4) représenté, pour la réception de positions (A1 à A4) à parcourir par l'effecteur (5) d'extrémité et d'obstacles (8) à contourner par l'effecteur (5) d'extrémité.

8. Procédé d'établissement suivant la revendication 6 ou 7,
**caractérisé en ce que**
le dispositif (1) de programmation reçoit une entrée numérique pour la réception d'un décalage (OFF) du plan (El à E4) représenté de positions (A1 à A4) à parcourir par l'effecteur (5) d'extrémité et d'obstacles (8) à contourner par l'effecteur (5) d'extrémité.

9. Procédé d'établissement suivant la revendication 6, 7 ou 8,
**caractérisé en ce que** le dispositif (1) de programmation reçoit une tolérance (δP) admissible respective de l'utilisateur (9) en plus des positions (A1 à A4) à parcourir par l'effecteur (5) d'extrémité.

10. Procédé d'établissement suivant l'une des revendications précédentes,
**caractérisé en ce que**
les positions (A1 à A4) reçues par le dispositif (1) de programmation et à parcourir par l'effecteur (5) d'extrémité forment des points d'appui de la voie (7) à parcourir par l'effecteur (5) d'extrémité et **en ce que** le dispositif (1) de programmation détermine la voie (7) à parcourir dans le système (K) de coordonnées de machine global par interpolation entre les points (A1 à A4) d'appui.

11. Procédé d'établissement suivant l'une des revendications précédentes,
**caractérisé en ce que**
le dispositif (1) de programmation détermine la voie (7) à parcourir par l'effecteur (5) d'extrémité de manière à satisfaire un critère (OK) d'optimisation défini à l'avance.

12. Procédé d'établissement suivant la revendication 11,
**caractérisé en ce que**
le critère (OK) d'optimisation consiste **en ce que** la voie (7) à parcourir par l'effecteur (5) d'extrémité est parcourue au mieux en temps ou en énergie en tenant compte des limitations d'entraînement d'axes (6) réglés en position de la machine commandée en déplacement.

13. Procédé suivant l'une des revendications précédentes,
**caractérisé en ce que**
les systèmes (K1 à K4) de coordonnées locaux forment une séquence et **en ce que** le dispositif (1) de programmation sélectionne, à partir d'un système (K1 à K4) de coordonnées local sélectionné momentanément, sur la base d'instructions (UP, DOWN) documentaires unitaires pour tous les systèmes (K1 à K4) de coordonnées locaux dans la séquence de systèmes (K1 à K4) de coordonnées locaux, le système (K1 à K4) de coordonnées local précédent et/ou suivant.

14. Procédé suivant l'une des revendications précédentes,
**caractérisé en ce que**
le dispositif (1) de programmation détermine, à l'aide de la voie (7) déterminée, une séquence de valeurs (p) de consigne de position pour les axes (6) réglés en position de la machine commandée en déplacement, au moyen de laquelle on déplace l'effecteur (5) d'extrémité le long de la voie (7) à parcourir.

15. Programme d'ordinateur, qui comprend un code machine (4), qui peut être élaboré directement par un dispositif (1) de programmation, dans lequel l'élaboration du code machine (4) par le dispositif (1) de programmation fait que le dispositif (1) de programmation effectue un procédé d'établissement suivant l'une des revendications précédentes.

16. Programme d'ordinateur suivant la revendication 15,
**caractérisé en ce que**
il est mis en mémoire sous une forme déchiffrable par ordinateur sur un support (3) de données.
